# EUROPEAN PATENT SPECIFICATION

(11) **EP 3 409 528 B1**
(45) Date of publication and mention of the grant of the patent: **08.07.2020**
(21) Application number: 18174011.9
(22) Date of filing: 24.05.2018
(51) Int. Cl.: B60L 1/00, B60H 1/00, B60L 53/62

(54) **CHARGE CONTROL APPARATUS OF ELECTRIC VEHICLE**
LADUNGSSTEUERUNGSVORRICHTUNG FÜR EIN ELEKTRISCHES FAHRZEUG
APPAREIL DE COMMANDE DE CHARGE DE VÉHICULE ÉLECTRIQUE

(30) Priority: 31.05.2017 JP 2017108230
(43) Date of publication of application: 05.12.2018
(73) Proprietor: Mitsubishi Jidosha Kogyo Kabushiki Kaisha, Tokyo 108-8410 (JP)
(72) Inventor: SUGIMOTO, Takanori, Tokyo, 108-8410 (JP)
(74) Representative: Regimbeau

(56) References cited:
- EP-A1- 2 418 114
- WO-A1-2014/115209

## Description

### Technical Field

This invention relates to a charge control apparatus of an electric vehicle, the apparatus being adapted to control charging of a battery (secondary battery) for supplying electric power to a travel motor loaded on an electric vehicle.

### Background Art

In recent years, electric vehicles such as battery electric vehicles (BEV) and plug-in hybrid vehicles (PHV) have been put to practical use. A battery loaded on such an electric vehicle is charged with electric power, which is supplied from a domestic power source or a commercial power supply such as a quick charger, for example, via a charging cable connected to a charging inlet of a vehicle body.

Methods for charging the battery include, for example, constant current charging for charging a travelling battery at a constant current, constant voltage charging for charging at a constant voltage, and constant power charging for charging with constant electric power. Various proposals have been made for charging methods comprising combinations of these methods. Concretely, a charging method, for example, comprising implementing constant power charging or constant current charging at an initial stage of charging and, when a battery voltage reaches a target voltage, ending constant current charging, and carrying out constant voltage charging for charging at a constant voltage, is in widespread use.

Among electric vehicles is one equipped with onboard equipment operated by electric power supplied from an external power source during charging of the battery, for example, an air conditioner for performing air conditioning within a vehicle compartment. Hybrid vehicles designed to charge a battery and an auxiliary device with electric power from an external power source are known from EP 2418114 A1 and WO 2014/115209 A1. Such an electric vehicle having onboard equipment (electrical load) may face the following problem: If the operation of the onboard equipment working during the charging of the battery stops, thereby lowering power consumption, the power consumed by the onboard equipment in the power supplied from the external power source is charged into the battery. As a result, the battery is overcharged. That is, the battery voltage may rise excessively beyond an allowable charge voltage. In a state where the constant voltage charging of the battery is executed, in particular, the above-mentioned problem is apt to occur.

An electric vehicle has been designed to solve the above problem (see Patent Document 1). According to this electric vehicle, if the allowable charge power of a battery is equal to or less than a predetermined surplus power when the onboard equipment is operated during charging of the battery (power storage mechanism), power supply from the external power source is stopped, and the onboard equipment is driven by power supplied from the battery.

### Prior Art Documents

### Patent Documents

Patent Document 1: JP-A-2009-071902

### Summary of the Invention

### Problems to be solved by the invention

By stopping power supply from the external power source at a predetermined timing during charging, and supplying power from the battery to drive the onboard equipment, as described in Patent Document 1, it may become possible to suppress the occurrence of the problem such as overcharge of the battery.

If power supply from the external power source is stopped during charging, however, mainly targeted charging of the battery does not proceed. Operating the onboard equipment by power supply from the battery, moreover, lowers the charge rate (SOC) of the battery. This may pose a problem such that a long time is required for charging the battery, or that the battery cannot be charged to a desired charge capacity within a predetermined time.

The present invention has been accomplished in the light of the above circumstances. It is an object of the invention to provide a charge control apparatus of an electric vehicle, which can prevent a battery voltage during charging from rising to a predetermined voltage or higher, without stopping power supply from an external power source during charging.

### Means for solving the problems

For solving the above-mentioned problems, there is provided a charge control apparatus as defined in appended claim 1 and the corresponding dependent claims.

There is also disclosed a charge control apparatus of an electric vehicle, which is loaded on the electric vehicle equipped with a battery rechargeable with electric power supplied from an external power source, and onboard equipment operating during charging of the battery, and which controls charging of the battery, the charge control apparatus comprising: target voltage setting means for setting a target voltage in charging the battery; charge control means for controlling charging of the battery so that the battery voltage of the battery becomes the target voltage; and equipment control means for controlling the operating state of the onboard equipment, wherein the equipment control means lowers the current of the onboard equipment in a plurality of steps by a predetermined current value per step when stopping the onboard equipment during charging of the battery; the target voltage setting means sets a first set voltage conformed to the characteristics of the battery, and a second set voltage lower than the first set voltage, as the target voltage; and the charge control means executes charging of the battery, with the second set voltage as the target voltage, when the onboard equipment is in operation during charging of the battery.

It is preferred for the target voltage setting means to set the second set voltage so that the difference between the first set voltage and the second set voltage becomes larger than the amount of a rise in the battery voltage associated with lowering of the current of the onboard equipment by the predetermined current value.

Preferably, the charge control means executes constant power charging or constant current charging until the battery voltage reaches the target voltage, and executes constant voltage charging after the battery voltage becomes equal to or higher than the target voltage; and the equipment control means lowers the current of the onboard equipment in the plurality of steps by the predetermined current value per step when stopping the onboard equipment while the constant voltage charging is being performed.

In this case, it is preferred for the equipment control means to lower the current of the onboard equipment by one step, and then lower the current of the onboard equipment further by one step at a time when the battery voltage rising in association with lowering of the current of the onboard equipment falls to the second set voltage.

Preferably, when the equipment control means operates the onboard equipment during charging of the battery, the charge control means changes the target voltage from the first set voltage to the second set voltage at the timing of operation of the onboard equipment.

If the onboard equipment is an air conditioner for performing air conditioning within a vehicle compartment, the present invention is particularly effective, since the power consumed by the onboard equipment is high.

### Effects of the Invention

According to such a charge control apparatus of an electric vehicle concerned with the present invention, it is possible to prevent the battery voltage during charging from rising to a predetermined voltage or higher, without stopping power supply from an external power source during charging. Since power supply from the external power source is not stopped, moreover, the charging time of the battery is not prolonged.

### Brief Description of the Drawings

[FIG. 1] is a block diagram showing the schematic configuration of a charge control apparatus according to an embodiment of the present invention.
[FIG. 2] is a graph illustrating an example of charge control according to the embodiment of the present invention.
[FIG. 3] is a graph illustrating another example of the charge control according to the embodiment of the present invention.

### Mode for Carrying Out the Invention

A charge control apparatus of an electric vehicle according to an embodiment of the present invention will now be described in detail by reference to the accompanying drawings. First of all, the schematic configuration of the electric vehicle loaded with the charge control apparatus will be explained.

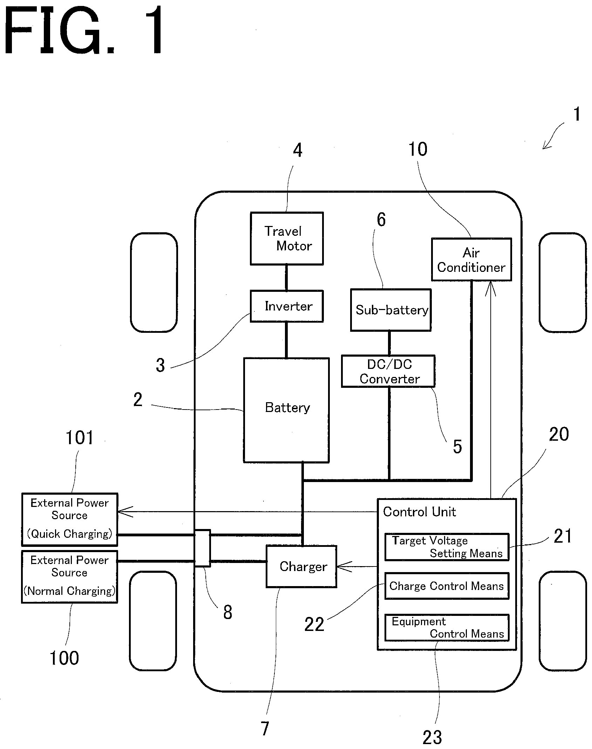

As shown in FIG. 1, an electric vehicle 1, a battery electric vehicle, is loaded with a battery 2 which is a high voltage secondary battery. The battery 2 is electrically connected to a travel motor 4 via an inverter 3. The travel motor 4 is coupled to driving wheels, although this is not shown. The electric vehicle 1 runs by the driving force of the travel motor 4.

The electric vehicle 1 is also loaded with a charger 7 for charging the battery 2 by an external power source 100 which is a domestic power source (normal charging). In charging the battery 2 by the external power source 100 as a domestic power source, a charging plug of a charging cable is connected to a power supply connector installed in a charging inlet 8 of the electric vehicle 1. In this state, an AC power of the order of 100V to 200V is inputted to the charger 7 from the external power source 100. The power inputted to the charger 7 from the external power source 100, the domestic power source, is converted into and boosted to a DC power of the order of 350V, for example, and inputted as a charging power to the battery 2. Charging of the battery 2 is performed thereby.

The electric vehicle 1 is configured to be capable of charging the battery 2 by connecting an external power source 101, which is a quick charging device, and the battery 2 by a charging cable. When the battery 2 is to be charged by the external power source 101, the quick charging device, a high voltage DC power supplied from the external power source 101 is inputted to the battery 2 not through the charger 7 loaded on the electric vehicle 1.

To the battery 2, a sub-battery (12V battery) 6 is connected via a DC/DC converter 5. An air conditioner 10 is connected to the battery 2. The air conditioner 10 is configured to operate with electric power supplied from the external power sources 100, 101 via the battery 2 when the battery 2 is being charged. That is, the air conditioner 10 is configured to be capable of so-called pre-air conditioning, a procedure for appropriately adjusting the temperature or the like of the interior of the vehicle compartment during charging of the battery 2.

The air conditioner 10 is configured to be capable of lowering the current at a stretch to stop the operation, but to lower the current in a plurality of steps by a predetermined current value per step, thereby stopping the operation, as will be described later. The number of the steps for lowering the current, or the current value to be lowered in one step is not particularly limited, and may be determined, as appropriate, based on the performance, etc. of the air conditioner 10. In the present embodiment, the number of the steps for lowering the current, and the current value to be lowered have been set, respectively, so that the air conditioner 10 can be stopped in several seconds or so.

The electric vehicle 1 is equipped with a control unit 20 as a charge control apparatus for executing charge control over the battery 2. This control unit 20 is composed, for example, of input/output devices, storage devices (ROM, RAM, etc.), a central processing unit (CPU), and timer counters. The control unit 20 controls the charging of the battery 2 with electric power supplied from the external power sources 100, 101 by the charger 7 or the external power source (quick charging device) 101, and controls the actions of the air conditioner 10 during charging of the battery 2. Charge control of the battery 2 by the charge control apparatus according to the present invention includes control over the air conditioner 10 during charging of the battery 2.

The control unit 20, concretely, is equipped with a target voltage setting means 21, a charge control means 22, and an equipment control means 23. The target voltage setting means 21, as will be described in detail later, sets a target voltage (maximum voltage) when the battery 2 is charged.

The charge control means 22 executes the charging control of the battery 2 so that the voltage of the battery 2 (battery voltage) becomes the target voltage set by the target voltage setting means 21. In more detail, the charge control means 22 executes "constant current charging" for charging the battery 2 at a constant current value, when the battery voltage is lower than the target voltage.

The charge control means 22 ends the "constant current charging" at a time when the battery voltage reaches the target voltage, and then executes "constant voltage charging". When the charge rate (SOC) of the battery 2 becomes a desired charge rate, e.g., 100%, charging of the battery 2 is finished. The charge control means 22 may execute "constant power charging", in which the battery 2 is charged at a constant power value, instead of "constant current charging".

The equipment control means 23 controls the operating state of the air conditioner (onboard equipment) 10 during charging of the battery 2. If pre-air conditioning by the air conditioner 10 is performed during charging of the battery 2, the equipment control means 23 controls the actions of the air conditioner 10, as appropriate, so that the interior of the vehicle compartment is at an appropriate temperature or the like. That is, the equipment control means 23 operates or stops the air conditioner 10, as appropriate, so that the interior of the vehicle compartment is at the set temperature set by a user, for example.

The air conditioner 10 is configured not only to be capable of lowering the current at a stretch, thereby stopping the operation, but also to be capable of lowering the current in the plurality of steps by the predetermined current value per step, thereby stopping the operation, as described earlier.

In stopping the air conditioner 10 at a predetermined timing during charging of the battery 2, the equipment control means 23 lowers the current in the plurality of steps by the predetermined current value per step to stop the air conditioner 10. In stopping the air conditioner 10 at a timing when constant current charging is executed by the charge control means 22 (a timing when the battery voltage does not reach the target voltage), for example, the equipment control means 23 lowers the current of the air conditioner 10 at a stretch. In stopping the air conditioner 10 at a timing when constant voltage charging is executed by the charge control means 22 (a timing when the battery voltage reaches the target voltage), the equipment control means 23 lowers the current of the air conditioner 10 in the plurality of steps by the predetermined current value per step.

Needless to say, even in a state where constant current charging is performed by the charge control means 22, it is permissible for the equipment control means 23 to lower the current of the air conditioner 10 in a plurality of steps by a predetermined current value per step.

Incidentally, the target voltage setting means 21 sets the target voltage (maximum voltage) for the battery voltage during charging of the battery 2, as stated above, and concretely, sets two values as the target voltage.

As the first of the values, the target voltage setting means 21 sets a first set voltage conformed to the characteristics of the battery 2. That is, the target voltage setting means 21 sets the first set voltage in the vicinity of an allowable charge voltage (namely, a maximum voltage allowable for the charging of the battery 2), within a range not exceeding the allowable charge voltage, in consideration of the characteristics of the battery 2.

As the second of the values, the target voltage setting means 21 sets a second set voltage conformed to the "predetermined current value" used when the equipment control means 23 lowers the current of the air conditioner 10 in the plurality of steps. Concretely, the target voltage setting means 21 sets the second set voltage in such a manner that the difference between the first set voltage set in conformity with the characteristics of the battery 2 and the above second set voltage becomes greater than the amount of a rise in the battery voltage associated with the lowering of the current of the air conditioner 10 by the "predetermined current value".

That is, the second set voltage is set at a value lower than the first set voltage to a degree to which when the current of the air conditioner 10 is lowered by the "predetermined current value", the battery voltage does not rise beyond the first set voltage. It is preferred, however, that the second set voltage be set at as high a value as possible within a range where the above requirement is fulfilled.

The charge control means 22 executes the charging control of the battery 2 based on these two target voltage values set by the target voltage setting means 21. Concretely, if the air conditioner 10 does not operate during charging of the battery 2 (if pre-air conditioning is not executed), the charge control means 22 executes charging of the battery 2, with the first set voltage as the target voltage. If the air conditioner 10 operates during charging of the battery 2, on the other hand, the charge control means 22 executes charging of the battery 2, with the second set voltage lower than the first set voltage being adopted as the target voltage.

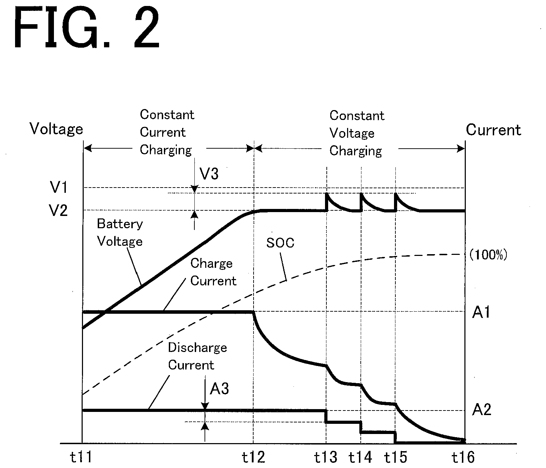

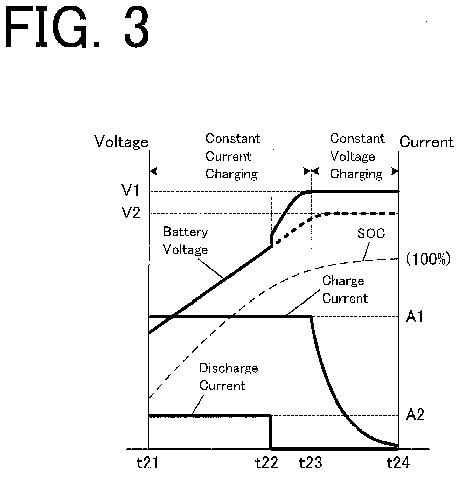

The charging control of the battery 2 by the charge control means 22 and the operation control of the air conditioner 10 by the equipment control means 23 will be described by reference to graphs in FIG. 2 and FIG. 3. FIGS. 2 and 3 are graphs showing the relation among the battery voltage, the charge current, and the discharge current (current supplied to the air conditioner 10) during charging of the battery 2.

FIG. 2 shows an example in which the air conditioner 10 operates simultaneously with the start of charging of the battery 2, and stops during constant voltage charging. FIG. 3 shows an example in which the air conditioner 10 operates simultaneously with the start of charging of the battery 2, and stops during constant current charging. In the examples shown in FIGS. 2 and 3, the first set voltage V1 and the second set voltage V2 are set as the target voltage values by the target voltage setting means 21.

In the example shown in FIG. 2, at a time t11, the air conditioner 10 operates simultaneously with the start of charging of the battery 2 (pre-air conditioning is started). Thus, the charge control means 22 starts charging of the battery 2 with the use of the second set voltage V2, which is lower than the first set voltage V1, as the target voltage.

In a state where the battery voltage is lower than the second set voltage V2 being the target voltage (period t11 to t12), the charge control means 22 executes "constant current charging" in which the battery 2 is charged at a constant current value A1. Then, at a time when the battery voltage reaches the second set voltage V2 (i.e., time t12), the charge control means 22 ends the "constant current charging", and executes "constant voltage charging" in which the battery 2 is charged at a constant voltage. That is, when the battery voltage reaches the second set voltage V2, the charge control means 22 controls the external power source (quick charging device) 101 or the charger 7 so that the battery voltage is held at the second set voltage V2.

At the time when the battery voltage reaches the second set voltage V2 (time t12), the charge rate (SOC) of the battery 2 is in a considerably high state (a state close to a full charge). During execution of constant voltage charging, therefore, electric power supplied to the battery 2 (electric power required for charging of the battery 2) gradually decreases and, accordingly, the charge current of the battery 2 gradually decreases.

At a time when the charge rate (SOC) of the battery 2 becomes nearly 100% and the charge current lowers to a value close to zero (a preset current value) (i.e., time t16), the charge control means 22 terminates charging of the battery 2.

In the example shown in FIG. 2, at the time t11, the air conditioner 10 is operated simultaneously with the start of charging of the battery 2, and a current at a predetermined value A2 (discharge current) is supplied from the external power source (quick charging) 101 or the external power source (normal charging) 100 to the air conditioner 10 via the battery 2. Then, the equipment control means 23 stops the air conditioner 10 at a time t13. At this time, "constant voltage charging" has been executed by the charge control means 22. Thus, the equipment control means 23 lowers the current of the air conditioner 10 in a plurality of steps (e.g., 3 steps) by a predetermined current value A3 per step, thereby stopping the air conditioner 10 (period t13 through t15).

When the equipment control means 23 lowers the current of the air conditioner 10 by one step (predetermined current value A3), the battery voltage rises, for example, by a predetermined voltage V3 in association with the lowering. That is, as the current of the air conditioner 10 decreases, the power supplied from the external power source 100 to the battery 2 increases and, accordingly, the battery voltage rises (times t13, t14, t15). As a result of the rise in the battery voltage associated with the fall in the current of the air conditioner 10, the external power source (quick charging device) 101 or the charger 7 is controlled, as appropriate, by the charge control means 22, whereupon the battery voltage declines gradually to the second set voltage V2, the target voltage.

When the battery voltage rises as the current of the air conditioner 10 lowers, it is conceivable that the battery voltage will rise excessively beyond the allowable charge voltage. In a state where constant voltage charging is performed, for example, the battery voltage is comparatively close to the allowable charge voltage, so that the battery voltage is likely to rise excessively beyond the allowable charge voltage.

With the present invention, however, the second set voltage V2 is set so that the difference (V1-V2) between the first set voltage V1 and the second set voltage V2 becomes larger than the amount of increase (predetermined voltage V3) in the battery voltage associated with the lowering of the current of the air conditioner 10 by the predetermined current value A3, as mentioned earlier. Hence, even when the current of the air conditioner 10 is lowered by one step (by the predetermined current value A3), with the constant voltage charging being performed, the battery voltage does not rise excessively beyond the first set voltage V1. In other words, the battery voltage does not rise excessively beyond the allowable charge voltage (≥first set voltage V1).

When the current of the air conditioner 10 is lowered in the plurality of steps, each of the timings for lowering the current is not particularly limited. It is preferred, however, that at a time when the increased battery voltage lowers to the second set voltage V2 (times t14, t15), the current of the air conditioner 10 is lowered further by one step (predetermined current value A3). By so doing, even if the air conditioner 10 is stopped during charging of the battery 2, an excessive rise in the battery voltage can be suppressed more reliably.

With the charge control apparatus according to the present invention, moreover, the current value of the air conditioner 10 is lowered in the plurality of steps to bring the air conditioner 10 to a halt, and the second set voltage V2 serving as the target voltage is set based on the "predetermined current value A3" which is an amount decreased per step. Thus, the target voltage is set to be high as compared with conventional devices. According to the charge control apparatus of the present invention, therefore, an improvement in the charge capacity of the battery 2 can be made, with the overcharging of the battery 2 being suppressed.

In the example shown in FIG. 3, at a time t21, the air conditioner 10 operates simultaneously with the start of charging of the battery 2 (pre-air conditioning is started), as in the example of FIG. 2. Thus, the charge control means 22 starts charging of the battery 2 with the use of the second set voltage V2 as the target voltage. The charge control means 22 executes "constant current charging" when the battery voltage is lower than the second set voltage V2, the target voltage.

In this example, during a period in which the battery voltage does not reach the second set voltage V2, which is the target voltage, and constant current charging is executed (i.e., at time t22), the equipment control means 23 stops the air conditioner 10.

On this occasion, the equipment control means 23 does not lower the current of the air conditioner 10 in a plurality of steps by a predetermined current value per step, but lowers the current of the air conditioner 10 at a stretch (in one step). That is, the equipment control means 23 lowers the current of the air conditioner 10 at a stretch (in one step), if it judges that even when the current of the air conditioner 10 is lowered at a stretch, the battery voltage does not reach the allowable charge voltage accordingly. By this procedure, the air conditioner 10 can be stopped in a shorter time, and the consumption of electric power by the air conditioner 10 can be cut down.

Since the air conditioner 10 is stopped before the battery voltage reaches the second set voltage V2, moreover, the charge control means 22 changes, at this point in time, the target voltage from the second set voltage V2 to the first set voltage V1.

Then, at a time when the battery voltage reaches the first set voltage V1, the target voltage, (i.e., time t23), the charge control means 22 ends "constant current charging" and executes "constant voltage charging". Then, at a time when the charge rate (SOC) of the battery 2 becomes nearly 100%, and the charge current lowers to a value close to zero (preset current value) (i.e., time t24), the charge control means 22 ends charging of the battery 2.

As described above, when the air conditioner 10 is stopped during charging of the battery 2, the target voltage is changed from the second set voltage V2 to the first set voltage V1 in accordance with circumstances. By so doing, an increase in the charge capacity of the battery 2 can be achieved.

According to the charge control apparatus concerned with the present invention, as described above, even when the onboard device such as the air conditioner 10 is stopped during charging of the battery 2, an excessive rise in the battery voltage can be suppressed without termination of power supply from the external power source 100. Moreover, an increase in the charge capacity of the battery 2 can be achieved in comparison with the conventional devices.

The foregoing embodiment is nothing but an example of the present invention. The present invention is not limited to the above embodiment, and can be variously changed or modified without departing from the scope and spirit of the invention.

The above embodiment, for example, illustrates the example in which when the battery is to be charged, electric power is supplied from the external power source to the air conditioner via the battery. However, the air conditioner may be supplied with electric power from the external power source without via the battery.

The above embodiment, for example, illustrates the present invention, with the air conditioner being exemplified as an example of the onboard equipment. However, it suffices that the onboard equipment is configured to be operated by electric power supplied from the battery or the external power source during charging of the battery. The onboard equipment is not limited to the air conditioner for performing air conditioning within the vehicle compartment.

The above embodiment also illustrates the present invention, with the battery electric vehicle being exemplified as an example of the electric vehicle. However, the present invention can also be applied, for example, as a charge control apparatus for a plug-in hybrid vehicle.

### Explanations of Letters or Numerals

- 1: Electric vehicle
- 2: Battery
- 3: Inverter
- 4: Travel motor
- 5: DC/DC converter
- 6: Sub-battery (auxiliary battery)
- 7: Charger
- 8: Charging inlet
- 10: Air conditioner
- 20: Control unit (charge control apparatus)
- 21: Target voltage setting means
- 22: Charge control means
- 23: Equipment control means
- 100: External power source (normal charging)
- 101: External power source (quick charging)

## Claims

1. A charge control apparatus (20) of an electric vehicle (1), which is loaded on the electric vehicle equipped with a battery (2) rechargeable with electric power supplied from an external power source (100, 101), and onboard equipment (10) operating during charging of the battery, the onboard equipment (10) being connected to the battery (2), the charge control apparatus (20) being configured to control charging of the battery, the charge control apparatus comprising:
target voltage setting means (21) for setting a target voltage in charging the battery;
charge control means (22) for controlling charging of the battery so that the battery voltage of the battery becomes the target voltage; and
equipment control means (23) for controlling the operating state of the onboard equipment,
**characterized in that** the equipment control means lowers the current of the onboard equipment in a plurality of steps by a predetermined current value (A3) per step when stopping the onboard equipment during charging of the battery,
the target voltage setting means sets a first set voltage (V1) conformed to the characteristics of the battery, and a second set voltage (V2) lower than the first set voltage, as the target voltage, and
the charge control means executes charging of the battery, with the second set voltage as the target voltage, when the onboard equipment is in operation during charging of the battery.

2. The charge control apparatus of an electric vehicle according to claim 1, wherein
the target voltage setting means (21) sets the second set voltage (V2) so that the difference between the first set voltage and the second set voltage becomes larger than the amount (V3) of a rise in the battery voltage associated with lowering of the current of the onboard equipment (10) by the predetermined current value (A3).

3. The charge control apparatus of an electric vehicle according to claim 1 or 2, wherein
the charge control means (22) executes constant power charging or constant current charging until the battery voltage reaches the target voltage, and executes constant voltage charging after the battery voltage becomes equal to or higher than the target voltage; and
the equipment control means (23) lowers the current of the onboard equipment (10) in the plurality of steps by the predetermined current value (A3) per step when stopping the onboard equipment while the constant voltage charging is being performed.

4. The charge control apparatus of an electric vehicle according to claim 3, wherein
the equipment control means (23) lowers the current of the onboard equipment (10) by one step, and then lowers the current of the onboard equipment further by one step at a time when the battery voltage rising in association with lowering of the current of the onboard equipment falls to the second set voltage (V2).

5. The charge control apparatus of an electric vehicle according to any one of claims 1 to 4, wherein
when the equipment control means (23) operates the onboard equipment (10) during charging of the battery (2), the charge control means (22) changes the target voltage from the first set voltage (V1) to the second set voltage (V2) at the timing of operation of the onboard equipment.

## Patentansprüche

1. Ladesteuervorrichtung (20) eines Elektrofahrzeugs (1), die im Elektrofahrzeug geladen ist, das mit einer Batterie (2), die mit einer elektrischen Leistung, die von einer externen Leistungsquelle (100, 101) zugeführt wird, wiederaufladbar ist, und einer Bordausrüstung (10), die während des Ladens der Batterie betrieben wird, ausgerüstet ist, wobei die Bordausrüstung (10) mit der Batterie (2) verbunden ist, wobei die Ladesteuervorrichtung (20) dazu ausgelegt ist, das Laden der Batterie zu steuern, wobei die Ladesteuervorrichtung Folgendes umfasst:
ein Sollspannungseinstellmittel (21) zum Einstellen einer Sollspannung beim Laden der Batterie;
ein Ladesteuermittel (22) zum Steuern des Ladens der Batterie, derart, dass die Batteriespannung der Batterie zur Sollspannung wird; und
ein Ausrüstungssteuermittel (23) zum Steuern des Betriebszustands der Bordausrüstung,
**dadurch gekennzeichnet, dass** das Ausrüstungssteuermittel den Strom der Bordausrüstung in einer Vielzahl von Schritten um einen vorbestimmten Stromwert (A3) pro Schritt verringert, wenn die Bordausrüstung während des Ladens der Batterie gestoppt wird,
das Sollspannungseinstellmittel stellt eine erste Einstellspannung (V1), die mit den Eigenschaften der Batterie konform ist, und eine zweite Einstellspannung (V2), die niedriger ist als die erste Einstellspannung, als die Sollspannung ein und
das Ladesteuermittel führt das Laden der Batterie mit der zweiten Einstellspannung als die Sollspannung aus, wenn die Bordausrüstung während des Ladens der Batterie in Betrieb ist.

2. Ladesteuervorrichtung eines Elektrofahrzeugs nach Anspruch 1, wobei
das Sollspannungseinstellmittel (21) die zweite Einstellspannung (V2) derart einstellt, dass die Differenz zwischen der ersten Einstellspannung und der zweiten Einstellspannung größer wird als der Betrag (V3) eines Anstiegs der Batteriespannung, der mit dem Verringern des Stroms der Bordausrüstung (10) um den vorbestimmten Stromwert (A3) verknüpft ist.

3. Ladesteuervorrichtung eines Elektrofahrzeugs nach Anspruch 1 oder 2, wobei
das Ladesteuermittel (22) ein Konstantleistungsladen oder ein Konstantstromladen ausführt, bis die Batteriespannung die Sollspannung erreicht, und ein Konstantspannungsladen ausführt, wenn die Batteriespannung mit der Sollspannung gleich oder höher als dieselbe ist; und
das Ausrüstungssteuermittel (23) den Strom der Bordausrüstung (10) in der Vielzahl von Schritten um den vorbestimmten Stromwert (A3) pro Schritt verringert, wenn die Bordausrüstung gestoppt wird, während das Konstantspannungsladen durchgeführt wird.

4. Ladesteuervorrichtung eines Elektrofahrzeugs nach Anspruch 3, wobei
das Ausrüstungssteuermittel (23) den Strom der Bordausrüstung (10) um einen Schritt verringert und dann den Strom der Bordausrüstung weiter um jeweils einen Schritt verringert, wenn die Batteriespannung, die in Verknüpfung mit dem Verringern des Stroms der Bordausrüstung ansteigt, auf die zweite Einstellspannung (V2) abfällt.

5. Ladesteuervorrichtung eines Elektrofahrzeugs nach einem der Ansprüche 1 bis 4, wobei
wenn das Ausrüstungssteuermittel (23) die Bordausrüstung (10) während des Ladens der Batterie (2) betreibt, das Ladesteuermittel (22) die Sollspannung zur Zeit des Betriebs der Bordausrüstung von der ersten Einstellspannung (V1) in die zweite Einstellspannung (V2) ändert.

## Revendications

1. Appareil de commande de charge (20) d'un véhicule électrique (1), qui est monté sur le véhicule électrique équipé d'une batterie (2) rechargeable avec une puissance électrique fournie à partir d'une source de puissance externe (100, 101), et d'un équipement embarqué (10) fonctionnant pendant la charge de la batterie, l'équipement embarqué (10) étant connecté à la batterie (2), l'appareil de commande de charge (20) étant configuré pour commander la charge de la batterie, l'appareil de commande de charge comprenant :
des moyens d'établissement de tension cible (21) pour établir une tension cible lors de la charge de la batterie ;
des moyens de commande de charge (22) pour commander la charge de la batterie de sorte que la tension de batterie de la batterie devienne la tension cible ; et
des moyens de commande d'équipement (23) pour commander l'état de fonctionnement de l'équipement embarqué,
**caractérisé en ce que** les moyens de commande d'équipement diminuent le courant de l'équipement embarqué en une pluralité d'étapes d'une valeur de courant prédéterminée (A3) par pas lors de l'arrêt de l'équipement embarqué pendant la charge de la batterie,
les moyens d'établissement de tension cible établissent une première tension fixée (V1) conformément aux caractéristiques de la batterie, et une deuxième tension fixée (V2) inférieure à la première tension fixée, en tant que tension cible, et
les moyens de commande de charge exécutent la charge de la batterie, avec la deuxième tension fixée en tant que tension cible, lorsque l'équipement embarqué est en fonctionnement pendant la charge de la batterie.

2. Appareil de commande de charge d'un véhicule électrique selon la revendication 1, dans lequel
les moyens d'établissement de tension cible (21) établissent la deuxième tension fixée (V2) de sorte que la différence entre la première tension fixée et la deuxième tension fixée devienne supérieure à la quantité (V3) d'une augmentation de la tension de batterie associée à la diminution du courant de l'équipement embarqué (10) de la valeur de courant prédéterminée (A3).

3. Appareil de commande de charge d'un véhicule électrique selon la revendication 1 ou 2, dans lequel
les moyens de commande de charge (22) exécutent une charge à puissance constante ou une charge à courant constant jusqu'à ce que la tension de batterie atteigne la tension cible, et exécutent une charge à tension constante après que la tension de batterie est devenue supérieure ou égale à la tension cible ; et
les moyens de commande d'équipement (23) diminuent le courant de l'équipement embarqué (10) en la pluralité d'étapes de la valeur de courant prédéterminée (A3) par pas lors de l'arrêt de l'équipement embarqué alors que la charge à tension constante est effectuée.

4. Appareil de commande de charge d'un véhicule électrique selon la revendication 3, dans lequel
les moyens de commande d'équipement (23) diminuent le courant de l'équipement embarqué (10) d'un pas, et diminuent ensuite le courant de l'équipement embarqué encore d'un pas au moment où l'augmentation de la tension de batterie en association avec l'abaissement du courant de l'équipement embarqué tombe à la deuxième tension fixée (V2).

5. Appareil de commande de charge d'un véhicule électrique selon l'une quelconque des revendications 1 à 4, dans lequel
lorsque les moyens de commande d'équipement (23) mettent en œuvre l'équipement embarqué (10) pendant la charge de la batterie (2), les moyens de commande de charge (22) changent la tension cible de la première tension fixée (V1) à la deuxième tension fixée (V2) en synchronisation avec le fonctionnement de l'équipement embarqué.
